# EUROPEAN PATENT SPECIFICATION

(11) **EP 0 895 891 B1**
(45) Date of publication and mention of the grant of the patent: **26.06.2002**
(21) Application number: 98114553.5
(22) Date of filing: 03.08.1998
(51) Int. Cl.: B60K 17/36, B60K 7/00, B60K 17/04

(54) **Power transmission device for a rigid wheeled power shovel**
Vorrichtung zur Leistungsübertragung für einen Schaufelbagger mit starren Rädern
Dispositif de transmission de puissance pour pelle mécanique à roues rigides

(30) Priority: 04.08.1997 IT BO970486
(43) Date of publication of application: 10.02.1999
(73) Proprietor: Bonfiglioli Riduttori S.p.A., 40012 Calderara di Reno (IT)
(72) Inventor: Zinzani, Giovanni, 48018 Faenza (IT); Lodola, Valerio, 74100 Forli' (IT)
(74) Representative: Prato, Roberto

(56) References cited:
- EP-A- 0 498 340
- EP-A- 0 520 389
- US-A- 3 598 194
- US-A- 3 786 888
- US-A- 3 858 730
- US-A- 4 210 219

## Description

The present invention relates to a power transmission device for a rigid wheeled power shovel.

In the present context, the term "rigid wheeled power shovel" is intended to mean a wheeled tractor with the same steering performance as a crawler vehicle. That is, the wheels cannot be steered, and comprise two independent transmission devices, one for the left and one for the right side of the vehicle. When cornering, the vehicle is turned about itself by reducing the speed of the inside wheels, and is turned in a circle by rotating the wheels on one side in the opposite direction to the wheels on the other side.

As is known, in modern power shovels of this type, the last transmission stage directly involving the wheels is defined, on each side of the vehicle, by a hydraulic motor reducer, which not only acts as a hub for a first wheel on that side, but also transmits motion to the other wheel on the same side by means of a chain pinion. This type of vehicle therefore only has one reduction stage per side (right or left), in that the only device for reducing the angular output speed of the hydraulic motor of the motor reducer is defined by the gears of the motor reducer itself. The second hub, to which the second wheel on the same side of the vehicle is fitted, has no second reducer, but has a second chain pinion connected by the respective chain to the first chain pinion of the first wheel.

Known transmission devices have numerous drawbacks due, in particular, to the chains, which, as is known, must be lubricated using specially designed oil sumps. Moreover, providing only one reducer for both wheels on the same side of the vehicle, the necessary power to drive both wheels must be transmitted using high torques at a fairly low engine speed, which is why currently marketed power shovels are fairly slow and call for very high drive torques, with all the usual problems this involves (sizing of the bearings, supports, etc.).

It is an object of the present invention to provide a power transmission device for rigid wheeled power shovels, designed to eliminate the aforementioned drawbacks.

According to the present invention, there is provided a power transmission device for a rigid wheeled power shovel, characterized by comprising a motor reducer fitted with a first wheel, and a reducer fitted with a second wheel, said first and said second wheel being located on the same side of the power shovel; and in that power is transmitted from the motor reducer fitted with the first wheel to the reducer fitted with the second wheel via mechanical transmission means.

A preferred, non-limiting embodiment of the present invention will be described by way of example with reference to the accompanying drawings, in which:
Figure 1 shows a top plan view of a preferred embodiment of a pair of drive wheels of a rigid wheeled power shovel, which drive wheels are fitted with the power transmission device according to the present invention;
Figure 2 shows a side view of the drive wheels and power transmission device in Figure 1;
Figure 3 shows a partially sectioned motor reducer used in the power transmission device according to the present invention;
Figure 4 shows a side view of the Figure 3 motor reducer;

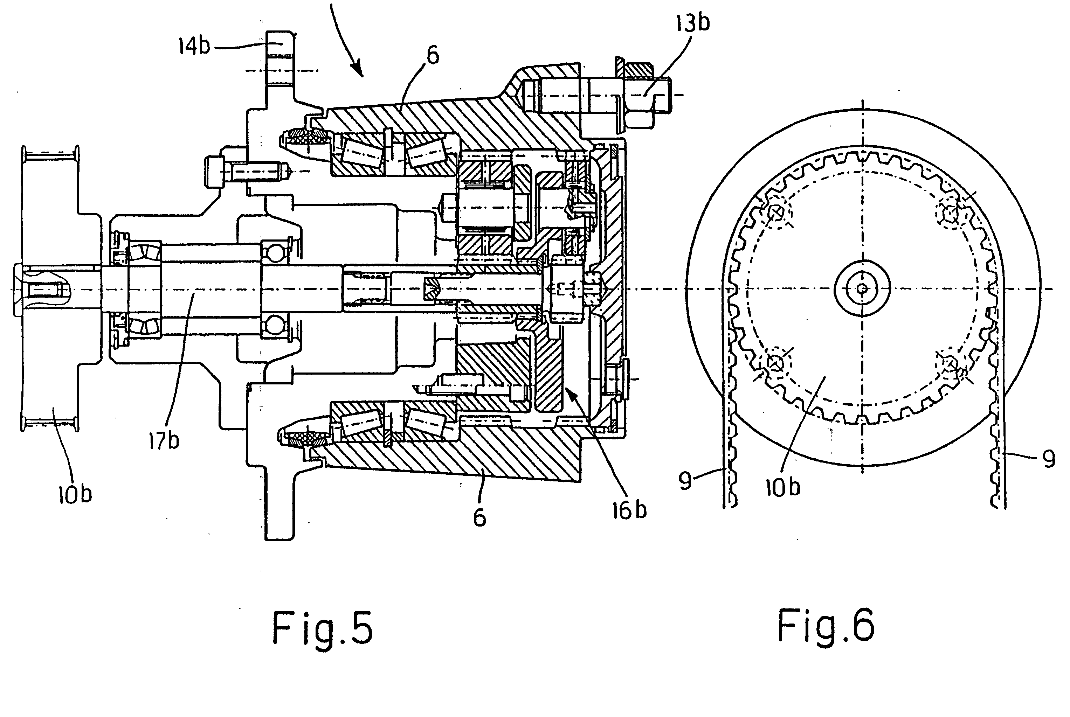

Figure 5 shows a partially sectioned reducer used in the power transmission device according to the present invention;
Figure 6 shows a side view of the Figure 5 reducer.

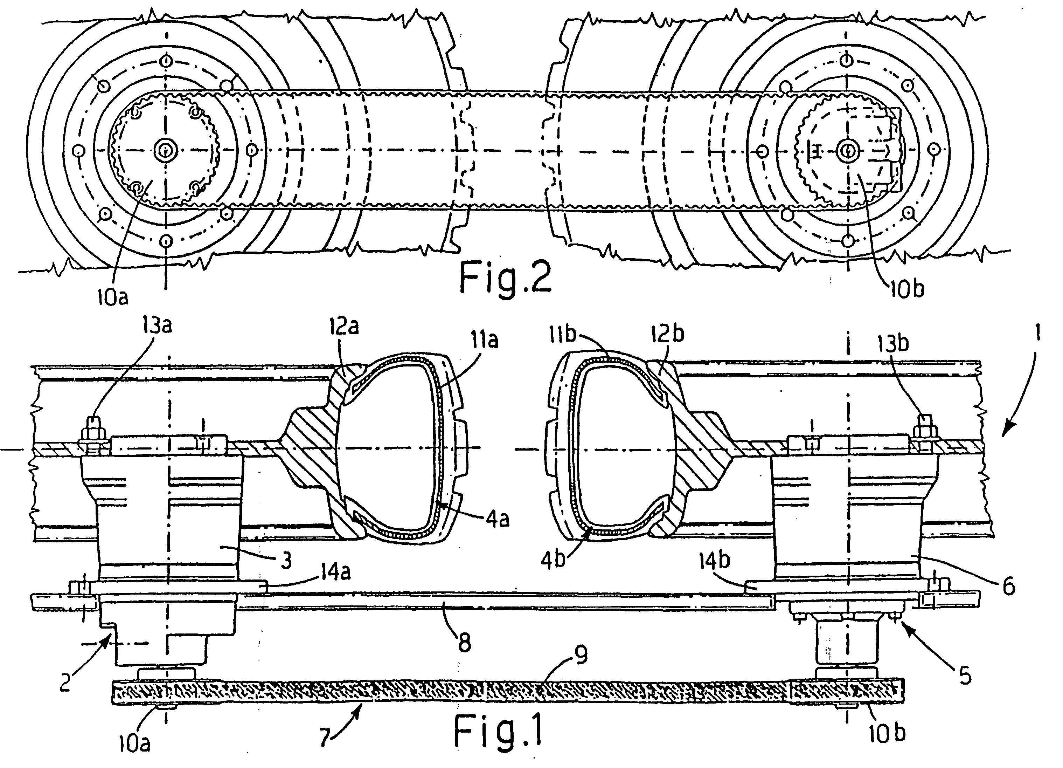

Number 1 in Figure 1 indicates as a whole the power transmission device according to the present invention. Device 1 comprises a motor reducer 2, the outer casing 3 of which is fitted integrally with a first wheel 4a of the power shovel (not shown); and a reducer 5, the outer casing 6 of which is fitted with a second wheel 4b of the power shovel.

As shown in Figures 1 and 2, in this particular embodiment, motor reducer 2 powers wheel 4a directly, and transmits power to reducer 5 via power transmission means 7. Both device 1 and wheels 4a, 4b are of course fitted integrally to the supporting structure 8 of the power shovel by fastening means (not shown).

In the Figure 1 and 2 embodiment, power transmission means 7 comprise a toothed belt 9 connecting toothed belt pulleys 10a, 10b.

Though a toothed belt transmission is shown in the Figure 1 and 2 embodiment, any power transmission system (e.g. normal belts, chains, etc.) may be used without departing from the scope of the present invention. What is important is that reduction is effected at both wheels 4a, 4b to prevent generating torques of excessive absolute values and which, as stated, are responsible for a considerable increase in overall production cost. Moreover, using a belt, in particular a toothed belt, transmission, an oil sump is no longer required, thus enabling further saving.

As shown in the accompanying drawings, wheels 4a, 4b comprise respective tires 11a, 11b - possibly with respective inner tubes - fitted to respective rims 12a, 12b, which, by means of respective screws 13a, 13b, are fitted to respective casings 3, 6 of motor reducer 2 and reducer 5 respectively.

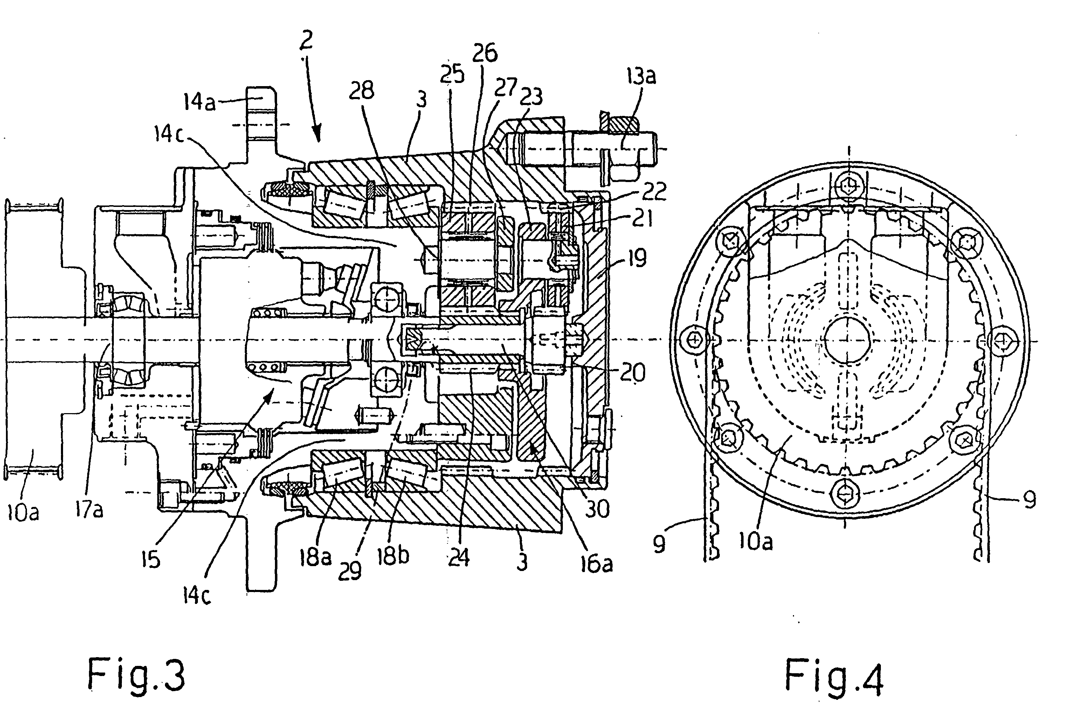

Motor reducer 2 in Figures 3 and 4 comprises a flange 14a by which the motor reducer is fitted to supporting structure 8 of the power shovel by fastening means (not shown); and casing 3 of motor reducer 2 (Figure 3) houses a motor 15, which provides for simultaneously powering casing 3 via the interposition of an epicyclic gear 16a, and pulley 10a via a shaft 17a.

As shown in Figure 3, besides being rotated by epicyclic gear 16a, casing 3 is also supported on a pair of bearings 18a, 18b resting on a hub 14c integral with flange 14a; countershaft 17a, at the opposite end to pulley 10a, comprises a cavity 29 housing a shaft 30 in turn comprising longitudinal projections engaging respective grooves in the wall of cavity 29; and the other free end of shaft 30 rests on a cover 19 of casing 3.

As stated, power is generated by motor 15, which, via countershaft 17a, powers shaft 30 and a first sun gear 20 of epicyclic gear 16a fitted to shaft 30; first sun gear 20 meshes with respective first planet wheels 21 (only one shown in Figure 3) which also mesh with teeth 22 formed inside casing 3; the first reduction stage transmits power to the second reduction stage via planet carrier 23, which in turn meshes with a second sun gear 24, fitted idly to countershaft 17a, of the second reduction stage; and second sun gear 24 meshes with respective second planet wheels 25 (only one shown in Figure 3) which transmit power to casing 3 via inner teeth 26, so as to rotate casing 3 and respective wheel 4a (Figure 1) fitted to casing 3. A second planet carrier 28 of the second reduction stage does not rotate, and pivots on fixed hub 14c by means of a pin. As stated, hub 14c and respective flange 14a are fitted to the supporting structure 8 of the power shovel by fastening means (not shown).

The same also applies to epicyclic gear 16b forming part of reducer 5, and which provides for rotating casing 6 to which wheel 4b is fitted (Figure 1).

Via toothed belt 9, rotation of pulley 10a rotates pulley 10b, which in turn rotates casing 6 of reducer 5 via a shaft 17b and second epicyclic gear 16b. Since rim 12b is screwed to casing 6 by screws 13b, wheel 4b on the same side (right or left) of the power shovel is also rotated.

Both wheels 4a, 4b are therefore rotated by means of a single toothed belt 9, a reducer 5 and a motor reducer 2.

As stated, the main advantage of the present invention lies in comprising two as opposed to only one reduction stage as in conventional devices, thus enabling lower drive torques and higher speeds. Moreover, using a belt, in particular a toothed belt, as opposed to a chain, makes the invention particularly easy to use.

Operation of the device is clearly understandable from the foregoing description with no further explanation required.

The advantages of the device according to the present invention are therefore as follows:
- lower torque and higher transmission speed;
- less noise using a belt, in particular a toothed belt;
- no bulky oil sumps for lubricating the chain;
- no oil for lubricating the chain.

Clearly, changes may be made to the power transmission device for rigid wheeled power shovels as described and illustrated herein without, however, departing from the scope of the present invention.

## Claims

1. A power transmission device (1) for a rigid wheeled power shovel, **characterized by** comprising a motor reducer (2) fitted with a first wheel (4a), and a reducer (5) fitted with a second wheel (4b), said first (4a) and said second (4b) wheel being located on the same side of the power shovel; and in that power is transmitted from said motor reducer (2) fitted with said first wheel (4a) to said reducer (5) fitted with said second wheel (4b) via power transmission means (7).

2. A device (1) as claimed in Claim 1, wherein said power transmission means (7) comprise a belt (9), in particular a toothed belt (9); and two belt pulleys (10a, 10b), in particular toothed-belt pulleys.

3. A device (1) as claimed in Claim 2, wherein said first and second wheels (4a, 4b) are fitted respectively to the casing (3) of said motor reducer (2) and to the casing (6) of said reducer (5); and said pulleys (10a, 10b) are fitted to respective rear output shafts (17a, 17b) of said motor reducer (2) and said reducer (5) respectively.

4. A device (1) as claimed in Claim 3, wherein said casings (3, 6) and said pulleys (10a, 10b) are located on opposite sides of a supporting structure (8) of the power shovel.

5. A device (1) as claimed in at least one of the foregoing Claims, wherein said motor reducer (2) and said reducer (5) each comprise a respective epicyclic gear (16a, 16b).

6. A device (1) as claimed in Claim 5, wherein each epicyclic gear (16a, 16b) comprises at least two reduction stages.

7. A device (1) as claimed in Claim 5 or 6, wherein a planet carrier (28) of one reduction stage is fixed with respect to said supporting structure (8) of said power shovel.

8. A drive for a rigid wheeled power shovel, **characterized by** comprising at least two power transmission devices (1), one for each side of said power shovel, as claimed in the foregoing Claims.

## Patentansprüche

1. Leistungsübertragungsvorrichtung (1) für einen Schaufelbagger mit starren Rädern, **dadurch gekennzeichnet, daß** sie eine mit einem ersten Rad (4a) verbundene Motoruntersetzungseinheit (2) und eine mit einem zweiten Rad (4b) verbundene Untersetzungseinheit (5) aufweist, wobei das erste (4a) und das zweite (4b) Rad auf derselben Seite des Schaufelbaggers angeordnet sind, und daß von der mit dem ersten Rad (4a) verbundenen Motoruntersetzungseinheit (2) über Leistungsübertragungsmittel (7) Leistung an die mit dem zweiten Rad (4b) verbundene Untersetzungseinheit (5) übertragen wird.

2. Vorrichtung (1) nach Anspruch 1, wobei die Leistungsübertragungsmittel (7) einen Riemen (9), insbesondere einen Zahnriemen (9) und zwei Riemenscheiben (10a, 10b), insbesondere gezahnte Riemenscheiben, aufweisen.

3. Vorrichtung (1) nach Anspruch 2, wobei das erste und das zweite Rad (4a, 4b) jeweils mit dem Gehäuse (3) der Motoruntersetzungseinheit (2) bzw. dem Gehäuse (6) der Untersetzungseinheit (5) verbunden sind und die Riemenscheiben (10a, 10b) jeweils mit rückwärtigen Ausgangswellen (17a, 17b) der Motoruntersetzungseinheit (2) bzw. der Untersetzungseinheit (5) verbunden sind.

4. Vorrichtung (1) nach Anspruch 3, wobei die Gehäuse (3, 6) und die Riemenscheiben (10a, 10b) an sich gegenüberliegenden Seiten einer Tragstruktur (8) des Schaufelbaggers angeordnet sind.

5. Vorrichtung (1) nach wenigstens einem der vorhergehenden Ansprüche, wobei die Motoruntersetzungseinheit (2) und die Untersetzungseinheit (5) jede ein jeweiliges epizyklisches Getriebe (16a) enthalten.

6. Vorrichtung (1) nach Anspruch 5, wobei jedes epizyklische Getriebe (16a, 16b) wenigstens zwei Untersetzungseinheitn enthält.

7. Vorrichtung (1) nach Anspruch 5 oder 6, wobei ein Planetenträger (28) einer Untersetzungsstufe bezüglich der Tragstruktur (8) des Schaufelbaggers festgelegt ist.

8. Antrieb für einen Schaufelbagger mit starren Rädern, **dadurch gekennzeichnet, daß** er wenigstens zwei Leistungsübertragungsvorrichtungen (1) enthält, eine für jede Seite des Schaufelbaggers, nach einem der vorhergehenden Ansprüche.

## Revendications

1. Un dispositif de transmission de puissance (1) pour pelle mécanique à roues rigides, **caractérisé en ce qu'**il comprend un moto-réducteur (2) muni d'une première roue (4a), et un réducteur (5) muni d'une seconde roue (4b), ladite première (4a) et ladite seconde (4b) roue étant placée sur le même côté de la pelle mécanique ; et **en ce qu'**une puissance est transmise dudit moto-réducteur (2) muni de ladite première roue (4a) audit réducteur (5) muni de ladite seconde roue (4b) par l'intermédiaire de moyens de transmission de puissance (7).

2. Un dispositif (1) tel que revendiqué à la revendication 1, dans lequel lesdits moyens de transmission de puissance (7) comprennent une courroie (9), en particulier une courroie dentée (9) ; et deux poulies de courroie (10a, 10b), en particulier des poulies de courroie dentée.

3. Un dispositif (1) tel que revendiqué à la revendication 2, dans lequel lesdites première et seconde roues (4a, 4b) sont montées respectivement sur l'enveloppe (3) dudit moto-réducteur (2) et sur l'enveloppe (6) dudit réducteur (5) ; et en ce que lesdites poulies (10a, 10b) sont respectivement montées sur des arbres de sortie arrière respectifs (17a, 17b) dudit moto-réducteur (2) et dudit réducteur (5).

4. Un dispositif (1) tel que revendiqué à la revendication 3, dans lequel ledit boîtier (3, 6) et lesdites poulies (10a, 10b) sont placées sur les côtés opposées d'une structure de support (8) de la pelle mécanique.

5. Un dispositif (1) tel que revendiqué dans au moins une des revendications précédentes, dans lequel ledit moto-réducteur (2) et ledit réducteur (5) comprennent chacun un engrenage épicyclique respectif (16a, 16b).

6. Un dispositif (1) tel que revendiqué à la revendication 5, dans lequel chaque engrenage épicyclique (16a, 16b) comprend au moins deux étages de réduction.

7. Un dispositif (1) tel que revendiqué à la revendication 5 ou 6, dans lequel un porte-pignons satellites (28) d'un étage de réduction est fixe par rapport à ladite structure de support (8) de ladite pelle mécanique.

8. Un entraînement pour pelle mécanique à roues rigides, **caractérisé en ce qu'**il comprend au moins deux dispositifs de transmission de puissance (1), un pour chaque côté de ladite pelle mécanique, tels que revendiqués dans les revendications précédentes.
